# EUROPEAN PATENT SPECIFICATION

(11) **EP 1 780 860 B1**
(45) Date of publication and mention of the grant of the patent: **31.03.2010**
(21) Application number: 06255501.6
(22) Date of filing: 26.10.2006
(51) Int. Cl.: H02J 3/24

(54) **System and method for controlling power flow of electric power generation system**
Anordnung und Verfahren zum Leistungssteuern in einem Energieversorgungssystem
Système et méthode pour régler le flux de puissance dans un système de génération d'énergie

(30) Priority: 31.10.2005 US 264192
(43) Date of publication of application: 02.05.2007
(73) Proprietor: GENERAL ELECTRIC COMPANY, Schenectady, NY 12345 (US)
(72) Inventor: Teichmann, Ralph, Albany New York 12210 (US)
(74) Representative: Bedford, Grant Richard

(56) References cited:
- EP-A- 1 022 838
- WO-A-96/19025
- WO-A2-2004/059814
- US-B1- 6 252 753

## Description

The invention relates generally to a system for controlling power flow of an electric power generation system, and particularly to a system and method for controlling power flow of a power generation system.

Power generation systems comprising a power converter constitute a higher share of the overall power generation equipment. Power generation systems comprising a power converter include wind turbines, gas turbines, solar generation systems, hydro-power systems or fuel cells. Power generation systems typically complement conventional power generation equipment such as diesel generators or large turbo generators directly coupled to the grid without a solid-state power conversion stage.

Power converters coupled to the power generation equipment typically have integrated dissipative elements, which serve protective functions. These dissipative elements dissipate energy out of the electrical system, typically by a conversion into thermal energy. For example, dissipative loads connected to the power converter in wind turbines protect the power conversion stage and the generator during grid failures. During normal operation these dissipative loads remain unused.

A power imbalance in an alternating current (AC) utility system results in a frequency and/or voltage deviation from the nominal values or frequencies and voltages outside a prescribed tolerance band. If voltages and/or frequencies of the utility system are outside the prescribed tolerance band, load equipments and generation equipments may be damaged. For example, tolerance bands for voltages may be in the range of +/- 10% of a nominal voltage value, although higher values may be permitted depending on the utility system. Similarly, for example tolerance band for frequencies may be in the range of +/- 5% of a nominal frequency value.

Specifically in smaller grids, which are not coupled to a large utility system, (also referred as "islanded grids"), power demand and power production need to be matched to provide stability to the grid. In the islanded grids with power generation equipment comprising a power converter often presenting a larger share of the total generation system, sudden load changes, such as load shedding, may result in a transient voltage and frequency that is outside the tolerance band. This is due to the fact that both conventional power generation equipment (for example, diesel generators) or alternative power generation equipment such as wind turbines, fuel cells, or the like are too slow in adjusting the power generation instantaneously. Furthermore, sudden load variations put additional stress on all rotating power generation units in the grid leading to pre-mature failure of generators, bearings and gears.

US-A-6 252 753 discloses an electrical power distribution system having geographically separated plural generation stations and geographically separated loads which is improved by dynamically offsetting a nominal real power operating point of a main control system driving a power control element that variably feeds electrical power onto a network of transmission lines between the stations and the loads in response to deviations in frequency and/or phase of alternating current power on the network. Preferably the system further includes means for monitoring a threshold level of the deviations, and means for inhibiting the means for dynamically offsetting until the deviations exceed the threshold level. In WO-A-2004/059814 a power control interface between an unstable power source such as a wind farm and a power transmission line employs an Electrical Energy Storage, Control System, and Electronic Compensation Module which act together like an "electronic shock absorber" for storing excess power during periods of increased power generation and releasing stored energy during periods of decreased power generation due to wind fluctuations.

Accordingly, there is a need for a technique that enables a faster control of the electric power balance of an electric power generation system. In addition, a system that enables control of the electric output power of a power generation system is also' desirable.

In accordance with one aspect of the present invention, a method for controlling power flow of an electric power generation system is provided. The method includes generating or dissipating electric power to maintain a predetermined grid voltage and frequency. The electric power is transmitted to a grid; and the current and voltage of the electric power thus transmitted are sensed. The frequency of electric power transmitted to the grid is determined based on the sensed current or voltage. A grid-side converter is then controlled to regulate voltage and frequency of the electric grid by scheduling power flow to a compensating circuit when the sensed voltage is outside a desired voltage range or the determined frequency is outside a desired frequency range. The step of generating or dissipating electric power comprises generating or dissipating electric power by a power generator comprising a plurality of power systems, whereby the compensating circuit is operated as a load sink to dissipate excess power by generating a reverse power flow from the grid to at least one of the power systems.

In accordance with another aspect of the present embodiment; a system for controlling power flow of an electric power generation system is provided. The system includes a grid-side converter configured to produce electric power at predetermined voltage and frequency and transmit the electric power to a grid. A current sensor is communicatively coupled to the grid and configured to detect the current at a predetermined location in the grid. A voltage sensor is communicatively coupled to the grid and configured to detect voltage at a predetermined location in the grid. A control circuit is configured to determine frequency of electric power transmitted to the grid based on detected current or voltage in the grid. The control circuit is also configured to control the grid-side converter to regulate the voltage and frequency of electric power transmitted to the grid via a compensating circuit when the sensed voltage is outside a desired voltage range or the determined frequency is outside a desired frequency range. The electric power generation system comprises a power generator comprising a plurality of power systems. The control circuit comprises a compensating circuit operated as a load sink to dissipate excess power by generating a reverse power flow from the grid to at least one of the power systems.

Various features, aspects, and advantages of the present invention will become better understood when the following detailed description is read with reference to the accompanying drawings in which like characters represent like parts throughout the drawings, wherein:
FIG. 1 is a diagrammatical view of a power generation system in accordance with an exemplary aspect of the present embodiment;
FIG. 2 is a diagrammatical view of a wind power generation system having a plurality of wind turbines within a wind farm in accordance with an exemplary aspect of the present embodiment;
FIG. 3 is a diagrammatical view of a grid stability control system in accordance with an exemplary aspect of the present embodiment;
FIG. 4 is a further diagrammatical view of a grid stability control system in accordance with aspects of FIG. 2; and
FIG. 5 is a flow chart illustrating exemplary steps involved in controlling grid stability of a power generation system in accordance with an exemplary aspect of the present embodiment.

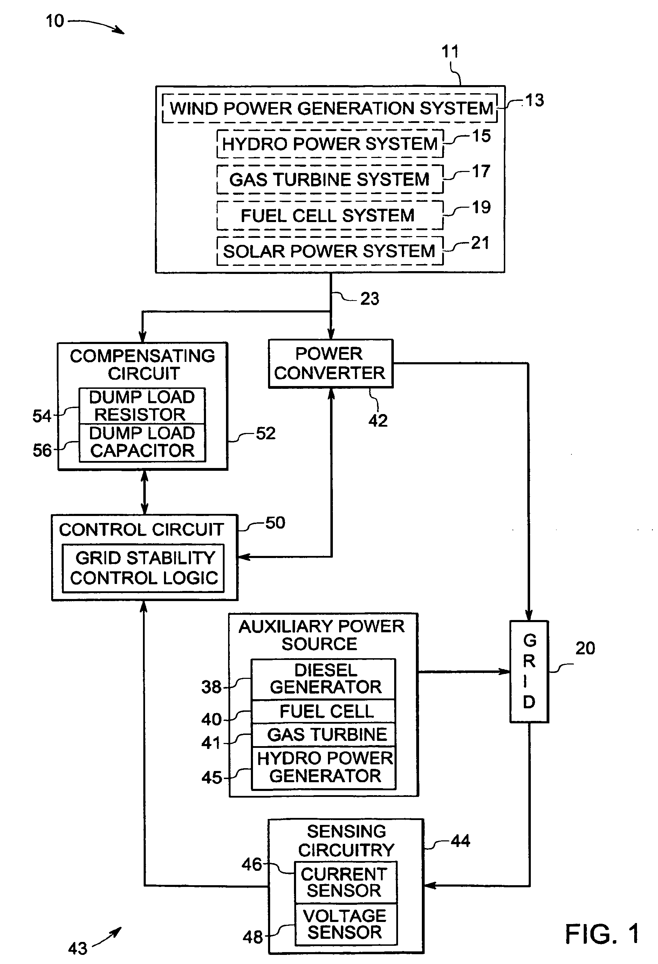

As discussed in detail below, aspects of the present embodiment provide a system and method for regulating voltage and frequency of power transmitted to a grid during load fluctuations, so as to control the net output power of a power generation system. In the embodiments illustrated, the power generation system includes a compensating circuit provided within the power generation system. Specific embodiments of the present technique are discussed below referring generally to FIGS. 1-5.

Referring to FIG. 1, a power generation system is illustrated, and represented generally by reference numeral 10. In the illustrated embodiment, the power generation system 10 includes a power generator 11 having a wind turbine generation system 13 or a hydro power system 15 or gas turbine system 17 or a fuel cell system 19, or a solar power system 21 or a combination thereof adapted to collectively supply electrical power to a grid 20. The power generator 11 produces an electrical output 23.

In the illustrated embodiment, a plurality of auxiliary power sources such as a diesel generator 38, a fuel cell 40, a gas turbine 41, a hydro power generator 45, or the like are provided to supply electric power to the grid 20. Prescribed power output levels to the grid 20 may be based on power ramp-up/ ramp-down capabilities of auxiliary power sources conjointly supplying power to the grid 20.

In the illustrated embodiment, the system 10 includes a grid-side power converter 42 coupled to the power generator 11. The converter 42 is configured to convert the power transmitted from the power generator 11 and transmit the power to the grid 20. As appreciated by those skilled in the art, the converter 42 may include a single-phase inverter, a multi-phase inverter, or a multi-level inverter, or a parallel configuration or a combination thereof. In the illustrated embodiment, although one grid 20 is illustrated, the system 10 may supply power to a plurality of grids, or more generally, to various loads. Similarly, in certain other embodiments, a plurality of power converters may be used to convert DC power signals to AC power signals and transmit the signals to the grid 20.

The system 10 includes a grid stability control system 43 adapted to control voltage and/or frequency of the electric power grid by the power injected into or received from the grid 20. The grid stability control system 43 includes a sensing circuitry 44 having a current sensor 46 and a voltage sensor 48 communicatively coupled to the grid 20. A control circuit 50 is configured to receive current and voltage signals from the current sensor 46 and the voltage sensor 48, and to determine frequency and power flows of the grid 20 based on the detected current and/or voltage detected at the grid 20 in any suitable manner generally known to those skilled in the art.

The control circuit 50 may include a processor having hardware circuitry and/or software that facilitate the processing of signals from the sensing circuitry 44 and calculation of frequency of the grid 20. As will be appreciated by those skilled in the art, the processor 36 includes a range of circuitry types, such as a microprocessor, a programmable logic controller, a logic module, as well as supporting circuitry, such as memory devices, signal interfaces, input/output modules, and so forth.

In an exemplary embodiment, a compensating circuit 52 having a dump load resistor 54 and a dump load capacitor 56 is integrated into the power generator 11. Compensating circuit 52 is adapted to dissipate electric power. When the detected frequency of the grid 20 is outside a predetermined frequency range, the control circuit 50 actuates the power converter 42 to generate a reverse power flow from the grid 20 to the power generators. The excess power is dissipated via the dump load resistor 54. The excess power may be temporarily stored in the dump load capacitor 56. Thereby, the instantaneous difference between the power demand and power generated is balanced. For example, during short-term load fluctuating conditions, the compensating circuit 52 dissipates the excess electric power to stabilize the voltage and frequency of electric power at the grid 20 without adjusting the power generation or the generation of the auxiliary power generation system. Especially during low wind conditions, the full capacity of the power converter 42 is available for load regulation purposes. In the illustrated embodiment, there is an added advantage that the presence of the compensating circuit 52 is also required to stop the generator in case of an emergency for example, in permanent magnet generators.

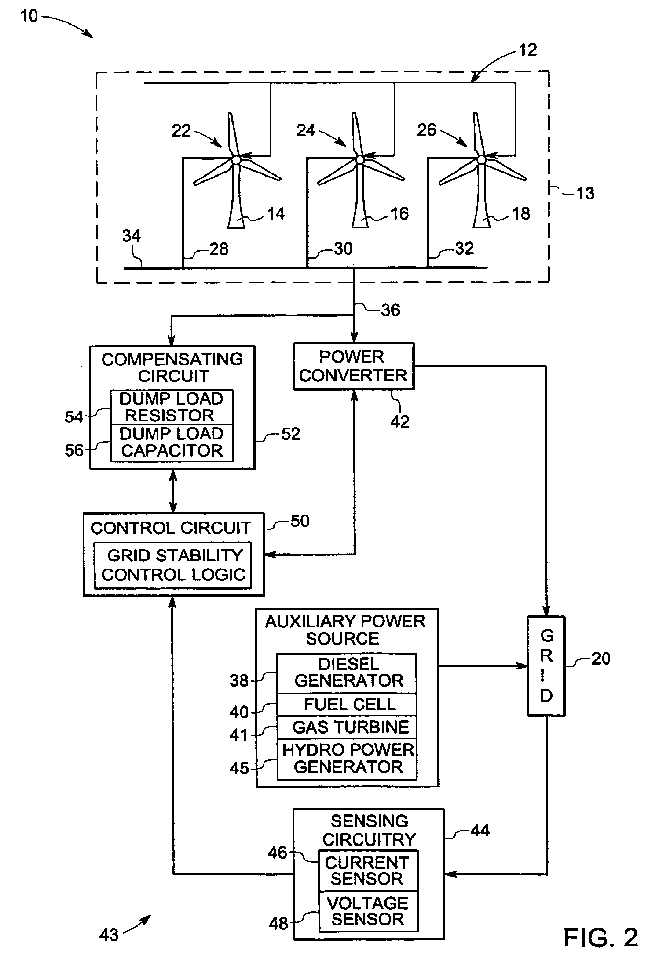

Referring now to FIG. 2, a wind power generation system 13 is illustrated. In the illustrated embodiment, the wind power generation system 13 includes a wind farm 12 having a plurality of wind turbine generators 14, 16, 18 adapted to collectively supply electrical power to a grid 20. The wind turbine generators 14, 16, 18 include bladed rotors 22, 24 and 26 respectively that transform the energy of wind into a rotational motion which is utilized to drive electrical generators drivingly coupled to the rotors 22, 24, 26 to produce electrical outputs 28, 30 and 32.

In the illustrated embodiment, power outputs of individual wind turbine generators are coupled to a low or medium voltage ac or dc distribution network 34 to produce a collective wind farm power output 36. As appreciated by those skilled in the art, the distribution network 34 is preferably a dc network. The power output may be stepped up in voltage by a transformer (not shown) before being supplied to the grid 20. The collective power output 36 may vary significantly based on wind conditions experienced by individual wind turbine generators. Embodiments of the present technique function to control the net power output transmitted to the grid 20 to a level acceptable by the grid 20, without necessarily curtailing the total power output 36 of the wind farm 12.

In the illustrated embodiment, the system 10 includes the grid-side power converter 42 coupled to the network 34. The converter 42 is configured to convert the power transmitted from the network 34 and transmit the power to the grid 20. If the network 34 is an ac network, an ac-to-ac converter is required. The system 10 includes the grid stability control system 43 adapted to control voltage and/or frequency of the grid via the electric power injected into or received from the grid 20. The grid stability control system 43 includes the compensating circuit 52 having the dump load resistor 54 and the dump load capacitor 56 integrated into at least one of the wind turbine generators 14, 16, 18, or located centrally closer to the power converter 42. The function of the grid stability control system 43 is similar to as described above.

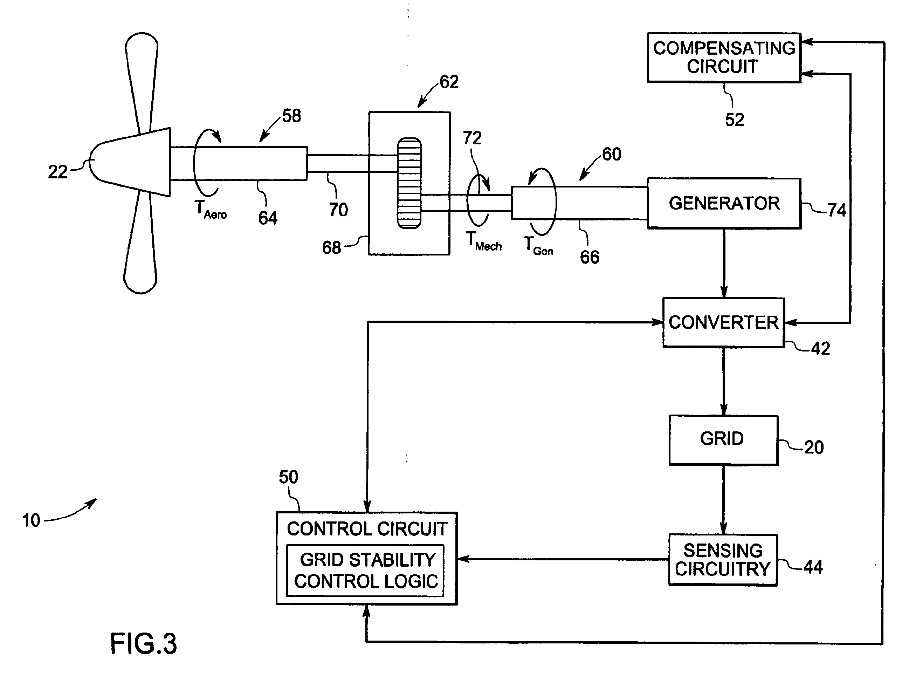

Referring to FIG. 3, this figure illustrates the grid stability control system 43. Referring generally to FIG. 3, the wind turbine system includes a turbine portion 58 that is adapted to convert the mechanical energy of the wind into a rotational torque (TAero) and a generator portion 60 that is adapted to convert the rotational torque produced by the turbine portion 58 into electrical power. A drive train 62 is provided to couple the turbine portion 32 to the generator portion 34.

The turbine portion 58 includes the rotor 22 and a turbine rotor shaft 64 coupled to the rotor 22. Rotational torque is transmitted from the rotor shaft 64 to a generator shaft 66 via the drive train 62. In certain embodiments, such as the embodiment illustrated in FIG. 3, the drive train 62 includes a gear box 68 configured to transmit torque from a low speed shaft 70 coupled to the rotor shaft 64 to a high speed shaft 72 coupled to the generator shaft 66. The generator shaft 66 is coupled to the rotor of an electrical generator 74. As the speed of the turbine rotor 22 fluctuates, the frequency of the output power of the generator 74 also varies. The generator 74 produces an air gap torque, also referred to as generator torque (TGen), which opposes the aerodynamic torque (TAero) of the turbine rotor 22.

As discussed above, the grid stability control system 43 is adapted to control voltage and frequency of the grid via the electric power transmitted to the grid 20. The sensing circuitry 44 is configured to detect current and voltage transmitted to the grid 20. The control circuit 50 is configured to receive current and voltage signals from the sensing circuitry 44 and to determine frequency of electric power transmitted to the grid 20 based on the detected current and/or voltage detected at the grid 20.

The compensating circuit 52 is integrated into the converter 42 and adapted to dissipate electric power. In one example, when the detected voltage exceeds a predetermined voltage and/or the detected frequency of electric power at the grid 20 exceeds a predetermined frequency, the control circuit 50 actuates the power converter 42 to generate a reverse power flow from the grid 20 to the wind generators. The predetermined frequency may be a threshold frequency or a nominal frequency as appreciated by those skilled in the art. The excess power is dissipated via the compensating circuit 52.

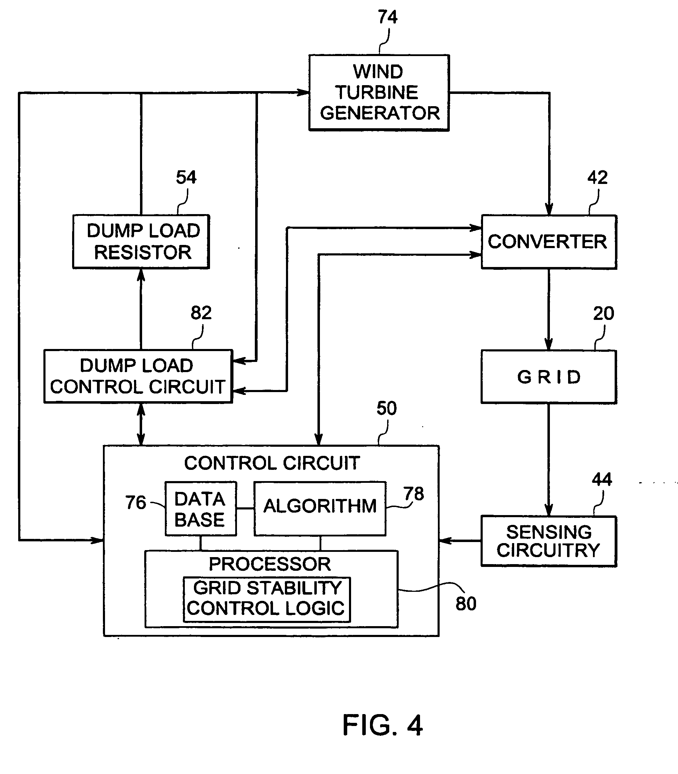

Referring to FIG. 4, a grid stability control system 43 in accordance with aspects of FIG. 3 is illustrated. In the illustrated embodiment, the converter 42 is configured to convert the AC power signal transmitted from the power source to another AC power signal, and to transmit the resulting AC signal to the grid 20. The control circuit 50 is configured to receive current and voltage signals from the sensing circuitry 44, and to determine frequency of electric power transmitted to the grid 20 based on the detected current and/or voltage.

The control circuit 50 may further include a database 76, an algorithm 78, and a processor 80. The database 76 may be configured to store predefined information about the power generation system. For example, the database 76 may store information relating to the number of wind power generators, power output of each wind power generator, number of auxiliary power sources, power output of each auxiliary power source, power demand, power generated, wind speed, or the like. Furthermore, the database 76 may be configured to store actual sensed/detected information from the above-mentioned current and voltage sensors, as well as frequency data. The algorithm 78, which will typically be stored as an executable program in appropriate memory, facilitates the processing of signals from the above-mentioned current and voltage sensors (e.g., for the calculation of frequency).

The processor 80 may include a range of circuitry types, such as a microprocessor, a programmable logic controller, a logic module, or the like. The processor 80 in combination with the algorithm 78 may be used to perform the various computational operations relating to determination of the voltage, current and frequency of electric power transmitted to the grid 20. In certain embodiments, the control circuit 50 may output data to a user interface (not shown): The user interface facilitates inputs from a user to the control circuit 50 and provides a mechanism through which a user can manipulate data and sensed properties from the control circuit 50. As will be appreciated by those skilled in the art, the user interface may include a command line interface, menu driven interface, and graphical user interface.

In the illustrated embodiment, when the detected frequency of electric power at the grid 20 is outside a predetermined frequency range, the control circuit 50 actuates the converter 42 to generate a reverse a power flow from the grid 20 to the wind generators. In an exemplary implementation, a dump load control circuit 82 of the compensating circuit is triggered, facilitating dissipation of the excess power via the dump load resistor 54. In another embodiment, when the detected frequency of electric power at the grid 20 exceeds a predetermined frequency, the control circuit 50 actuates the converter 42 to generate a reverse power flow from the grid 20 to the wind generators, and the wind generators are effectively operated as a load to dissipate energy. Thereby, excess power is dissipated, and the power and frequency of electric power of the grid is regulated. In yet another embodiment, when the detected frequency is below the predetermined frequency, larger amount of power is supplied to the grid 20.

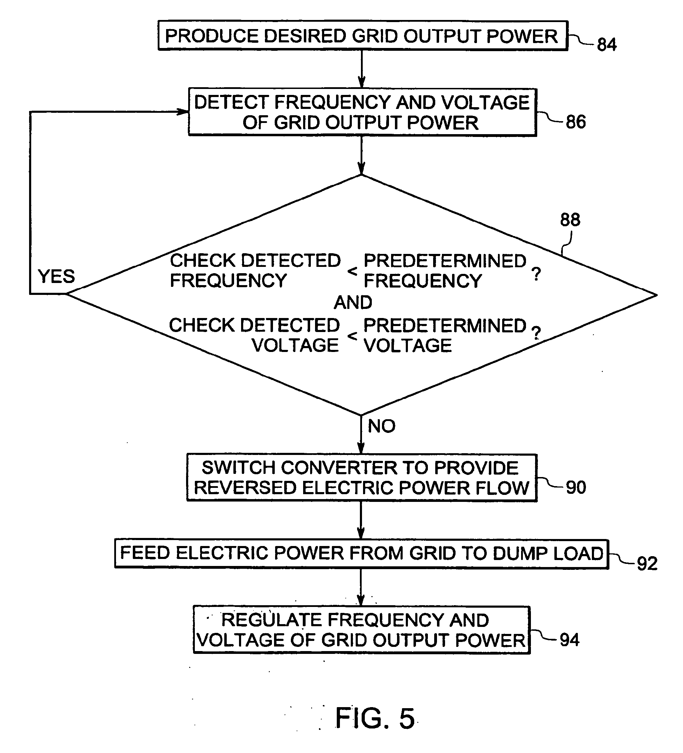

Referring to FIG. 5, a flow chart illustrating exemplary steps involved in controlling grid stability of a wind power generation system is illustrated. The method includes collectively supplying electrical power to a grid via a plurality of wind generators, as represented by step 84. The wind turbine generators transform the energy of wind into a rotational motion, which is utilized to drive electrical generators. Electric power is also supplied to the grid via plurality of auxiliary power sources. As will be appreciated by those skilled in the art, such "auxiliary power sources" may, in fact, be the primary power supply resources of the grid, and may include fossil fuel-based power plants, nuclear power plants, hydroelectric power plants, geothermal power plants, and so forth.

Voltage and frequency of electric power transmitted to the grid or at a pre-determined location in the grid are detected, as represented by step 86. In particular, in the presently contemplated embodiment, a separate current sensor detects current transmitted to the grid, and a voltage sensor detects voltage transmitted to the grid. The control circuit receives current and voltage signals from the current sensor and the voltage sensor, and determines frequency of electric power transmitted to the grid based on the detected current and/or voltage. The detected voltage is then compared with a predetermined voltage, and the detected frequency of electric power is compared with a predetermined frequency, as represented by step 88. When the detected voltage falls outside a predetermined voltage range and/or the detected frequency of electric power at the grid 20 falls outside a predetermined frequency range, the control circuit 50 actuates the power converter 42 to generate a reverse power flow from the grid 20 to the wind generators. In the illustrated exemplary embodiment, when the detected voltage exceeds the predetermined voltage (or exceeds the predetermined voltage by a certain amount and/or for a certain period of time), and/or detected frequency of electric power at the grid exceeds the predetermined frequency (or more generally, when a difference between the frequencies exceeds a tolerance), the control circuit actuates the power converter to generate a reverse power flow from the grid to the wind generators, as represented by step 90. The excess power is dissipated via the dump load resistor 54, as represented by step 92. Thereby, the instantaneous difference between the power demand and power generated is balanced. The power and frequency of electric power transmitted to the grid is regulated by dissipating excess power as represented by step 94. As noted above, in certain embodiments, the instantaneous difference between the power demand and power generated may be balanced by generating a reverse power flow from the grid to the wind generators, effectively operating the wind generators as motors to drive other utility devices.

When the detected voltage and/or detected frequency are within the desired ranges, the cycle is repeated as described above. That is, normal production and supply of power from the wind turbine may be resumed. The above mentioned steps are also equally applicable to wind power generation systems having a plurality of wind generators supplying electric power to separate grids. Depending on the load conditions, some wind turbines may be required to supply or to consume electric power while the remaining wind generators may not be required to supply or consume electric power. Thus, as will be appreciated by those skilled in the art, the compensating circuits of the wind generators not required to supply electric power may be operated as load sinks to dissipate excess power while the remaining wind generators are operated at optimum operating conditions. The resulting control scheme facilitates stabilization of the voltage and frequency of electric power at the grid. Although in the illustrated embodiment, the control scheme is described with respect to wind turbine, in certain other embodiments, aspects of the present embodiment may be equally applicable to other power generators.

While only certain features of the invention have been illustrated and described herein, many modifications and changes will occur to those skilled in the art. It is, therefore, to be understood that the appended claims are intended to cover all such modifications and changes as fall within the true spirit of the invention.

### PARTS LIST

- 10: power generation system
- 11: power generator
- 12: wind farm
- 13: wind power generation system
- 14: wind turbine generator
- 15: hydro power generation system
- 16: wind turbine generator
- 17: gas turbine system
- 18: wind turbine generator
- 19: fuel cell system
- 20: grid
- 21: solar power system
- 22: bladed rotor
- 23: power output
- 24: bladed rotor
- 26: bladed rotor
- 28: electrical output
- 30: electrical output
- 32: electrical output
- 34: medium voltage distribution network
- 36: power output
- 38: diesel generator
- 40: fuel cell
- 41: gas turbine
- 42: power converter
- 43: grid stability control system
- 44: sensing circuitry
- 45: hydro power generator
- 46: current sensor
- 48: voltage sensor
- 50: control circuit
- 52: compensating circuit
- 54: dump load resistor
- 56: dump load capacitor
- 58: turbine portion
- 60: generator portion
- 62: drive train
- 64: turbine rotor shaft
- 66: generator shaft
- 68: gear box
- 70: low speed shaft
- 72: high speed shaft
- 74: generator
- 76: database
- 78: algorithm
- 80: processor
- 82: dump load control circuit
- 84: step to produce desired grid output power
- 86: step to detect grid frequency and voltage of grid output power
- 88: step to compare detected voltage with a predetermined voltage, and the detected frequency of electric power with a predetermined frequency
- 90: step to switch converter to provide reversed electric power flow
- 92: step to feed electric power from grid to dump load
- 94: step to regulate frequency and voltage of grid output power

## Claims

1. A method for controlling power flow of an electric power generation system (10) comprising:
generating or dissipating electric power to maintain a predetermined grid voltage and frequency;
transmitting the electric power to a grid (20);
sensing current or voltage of the electric power transmitted to the grid (20);
determining frequency of the grid (20) and the power transmitted to the grid (20) based on the sensed current of voltage; and
controlling a grid-side converter (42) to regulate the voltage and frequency of the grid (20) via scheduling power flow to a compensating circuit (52) when the sensed voltage is outside a desired voltage range or the determined frequency is outside a desired frequency range;
**characterized in that:**
said generating or dissipating electric power comprises generating or dissipating electric power by a power generator (11) comprising a plurality of power systems (13, 15, 17, 19, 21); and
said compensating circuit (52) is operated as a load sink to dissipate excess power from the grid when the sensed voltage exceeds a predetermined voltage or the determined frequency exceeds a predetermined frequency by generating a reverse power flow from the grid to at least one of the power systems (13, 15, 17, 19, 21).

2. The method of claim 1, comprising generating electric power via a plurality of wind generators (14, 16, 18).

3. A system (43) for controlling power flow of an electric power generation system (10) comprising:
a grid-side converter (42) configured to produce electric power at predetermined voltage and frequency and transmit the electric power to a grid (20);
a current sensor (46) communicatively coupled to the grid (20) and configured to detect the current at a pre-determined location in the grid (20);
a voltage sensor (48) communicatively coupled to the grid (20) and configured to detect voltage at said pre-determined location in the grid (20); and
a control circuit (50) configured to determine power and frequency of electric power transmitted to the grid (20) based on detected current or voltage transmitted to the grid (20);
**characterized in that:**
said control circuit (50) is configured control the grid-side converter (42) to regulate the voltage and frequency of electric power transmitted to the grid (20) via a compensating circuit (52) when the sensed voltage is outside a desired voltage range or the determined frequency is outside a desired frequency range; and
said electric power generation system (10) comprises a power generator (11) comprising a plurality of power systems (13, 15, 17, 19, 21);
said control circuit (50) comprises a compensating circuit (52) operated as a load sink to dissipate excess power by generating a reverse power flow from the grid to at least one of the power systems (13, 15, 17, 19, 21).

4. The system (43) of claim 3, wherein the grid (20) is coupled to a wind turbine.

5. The system (43) of claim 4, wherein the compensating circuit (52) is integrated into the wind turbine.

6. The system (43) of any one of claims 3 to 5, wherein the power generation system (10) comprises at least one auxiliary power source coupled to the grid (20) and configured to generate power.

## Patentansprüche

1. Verfahren zum Steuern des Energieflusses eines elektrischen Energieerzeugungssystems (10) mit den Schritten:
Erzeugen oder Vernichten von elektrischer Energie, um eine vorbestimmte Netzspannung und -frequenz einzuhalten;
Übertragen der elektrischen Energie an ein Netz (20);
Messen von Strom oder Spannung der an das Netz (20) übertragenen elektrischen Energie;
Ermitteln der Frequenz des Netzes (20) und der an das Netz (20) übertragenen Energie auf der Basis des(r) gemessenen Stroms oder Spannung; und
Steuern eines netzseitigen Umformers (42), um die Spannung und Frequenz des Netzes (20) durch Umlenken des Energieflusses zu einer Kompensationsschaltung (52) zu regeln, wenn die gemessene Spannung außerhalb eines Sollspannungsbereichs liegt oder die ermittelte Frequenz außerhalb eines Sollfrequenzbereiches liegt;
**dadurch gekenntzeichnet, dass:**
der Schritt einer Erzeugung oder Vernichtung elektrischer Energie die Erzeugung oder Vernichtung elektrischer Energie durch einen Energieerzeuger (11) umfasst, der mehrere Energiesysteme (13, 15, 17, 19, 21) aufweist; und
die Kompensationsschaltung (52) als eine Lastsenke betrieben wird, um überschüssige Energie aus dem Netz zu vernichten, wenn die gemessene Spannung eine vorbestimmte Spannung überschreitet oder die ermittelte Frequenz eine vorbestimmte Frequenz überschreitet, indem ein umgekehrter Energiefluss aus dem Netz zu wenigstens einem der Energiesysteme (13, 15, 17, 19, 21) erzeugt wird.

2. Verfahren nach Anspruch 1, das den Schritt einer Erzeugung elektrischer Energie mittels mehrerer Windkraftanlagen (14, 16, 18) aufweist.

3. System (43) zum Steuern des Energieflusses eines elektrischen Energieerzeugungssystems (10), aufweisend:
einen netzseitigen Umformer (42), der dafür konfiguriert ist, elektrische Energie mit vorbestimmter Spannung und Frequenz zu erzeugen und die elektrische Energie an ein Netz (20) zu übertragen;
einen Stromsensor (46), der kommunizierend mit dem Netz (20) gekoppelt und dafür konfiguriert ist, den Strom an einer vorbestimmten Stelle in dem Netz (20) zu detektieren;
einen Spannungssensor (48), der kommunizierend mit dem Netz (20) gekoppelt und dafür konfiguriert ist, die Spannung an der vorbestimmten Stelle in dem Netz (20) zu detektieren; und
eine Steuerschaltung (50), die dafür konfiguriert ist, Energie und Frequenz der an das Netz (20) übertragenen elektrischen Energie auf der Basis von an das Netz (20) übertragenen detektierten Strom oder Spannung zu ermitteln;
**dadurch gekennzeichnet, dass:**
die Steuerschaltung (50) dafür konfiguriert ist, den netzseitigen Umformer (42) zu steuern, um die Spannung und Frequenz der an das Netz (20) übertragenen Energie mittels einer Kompensationsschaltung (52) zu regeln, wenn die gemessene Spannung außerhalb eines Sollspannungsbereichs liegt oder die ermittelte Frequenz außerhalb eines Sollfrequenzbereiches liegt; und
das elektrische Energieerzeugungssystem (10) einen Energieerzeuger (11) umfasst, der mehrere Energiesysteme (13, 15, 17, 19, 21) aufweist;
die Steuerschaltung (50) eine als eine Lastsenke betriebene Kompensationsschaltung (52) umfasst, um überschüssige Energie durch Erzeugen eines umgekehrten Energieflusses aus dem Netz zu wenigstens einem der Energiesysteme (13, 15, 17, 19, 21) zu vernichten.

4. System (43) nach Anspruch 3, wobei das Netz (20) mit einer Windkraftanlage gekoppelt ist.

5. System (43) nach Anspruch 4, wobei die Kompensationsschaltung (52) in die Windkraftanlage integriert ist.

6. System (43) nach einem der Ansprüche 3 bis 5, wobei das Energieerzeugungssystem (10) wenigstens eine Hilfsenergiequelle aufweist, die mit dem Netz (20) gekoppelt und zur Erzeugung von Energie konfiguriert ist.

## Revendications

1. Procédé de régulation d'un transit de puissance d'un système (10) de production d'énergie électrique comprenant les étapes suivantes:
générer ou dissiper une énergie électrique pour maintenir une tension et une fréquence de réseau prédéterminées ;
transmettre l'énergie électrique à un réseau (20) ;
détecter le courant ou la tension de l'énergie électrique transmise au réseau (20) ;
déterminer la fréquence du réseau (20) et l'énergie transmise au réseau (20) en fonction du courant de tension détecté ; et
commander un convertisseur (42) côté réseau pour réguler la tension et la fréquence du réseau (20) par l'intermédiaire d'un ordonnancement du transit de puissance vers un circuit de compensation (52) quand la tension détectée se situe hors d'une plage de tension souhaitée ou que la fréquence déterminée se situe hors d'une plage de fréquence souhaitée ;
**caractérisé en ce que :**
ladite génération et dissipation de l'énergie électrique comprend la génération et la dissipation d'une énergie électrique par un générateur d'énergie électrique (11) comprenant une pluralité de systèmes d'énergie (13, 15, 17, 19, 21); et
ledit circuit de compensation (52) est utilisé en tant que puits de charge électrique pour dissiper l'excédent d'énergie du réseau lorsque la tension détectée dépasse une tension prédéterminée ou que la fréquence déterminée dépasse une fréquence prédéterminée en générant un reflux du transit de puissance à partir du réseau vers au moins un des systèmes électriques (13, 15, 17, 19, 21).

2. Procédé selon la revendication 1, comprenant la génération d'une énergie électrique par le biais d'une pluralité d'éoliennes (14, 16, 18).

3. Système (43) de régulation de transit de puissance d'un système (10) de production d'énergie électrique comprenant :
un convertisseur (42) côté réseau conçu pour produire une énergie électrique à une tension et à une fréquence prédéterminées et pour transmettre l'énergie électrique à un réseau (20) ;
un détecteur (46) de courant couplé de façon communicative au réseau (20) et conçu pour détecter le courant au niveau d'un emplacement prédéterminé dans le réseau (20) ;
un détecteur de tension (48) couplé de façon communicative au réseau (20) et conçu pour détecter une tension au niveau d'un emplacement prédéterminé dans le réseau (20) ; et
un circuit de commande (50) conçu pour déterminer une énergie et une fréquence d'une énergie électrique transmise au réseau (20) en fonction d'un courant ou d'une tension détecté(e) transmis(e) au réseau (20) ;
**caractérisé en ce que :**
ledit circuit de commande (50) est conçu pour commander le convertisseur (42) côté réseau pour réguler la tension et la fréquence d'une énergie électrique transmise au réseau (20) au moyen d'un circuit de compensation (52) lorsque la tension détectée se situe hors d'une plage de tension souhaitée ou que la fréquence déterminée se situe hors d'une plage de fréquence souhaitée ; et
ledit système (10) de production d'énergie électrique comprend un générateur d'énergie électrique (11) comprenant une pluralité de systèmes électriques (13, 15, 17, 19, 21) ;
ledit circuit de commande (50) comprend un circuit de compensation (52) utilisé en tant que puits de charge électrique pour dissiper l'excédent d'énergie en produisant un reflux du transit de puissance à partir du réseau vers au moins un des systèmes électriques (13, 15, 17, 19, 21).

4. Système (43) selon la revendication 3, dans lequel le réseau (20) est couplé à une éolienne.

5. Système (43) selon la revendication 4, dans lequel le circuit de compensation (52) est intégré dans l'éolienne.

6. Système (43) selon l'une quelconque des revendications 3 à 5, dans lequel le système (10) de production d'énergie comprend au moins une source d'énergie auxiliaire couplée au réseau (20) et conçue pour produire de l'énergie.
